## Europäisches Patentamt
## European Patent Office
## Office européen des brevets

(11) Veröffentlichungsnummer: **0 223 921**
**B1**

(12) # EUROPÄISCHE PATENTSCHRIFT

(45) Veröffentlichungstag der Patentschrift:
**21.09.88**

(21) Anmeldenummer: **86110468.5**

(22) Anmeldetag: **29.07.86**

(51) Int. Cl.⁴: **B 60 T 1/00**

(54) Parksperre für automatische Getriebe von Kraftfahrzeugen.

(30) Priorität: **18.10.85 DE 3537091**

(43) Veröffentlichungstag der Anmeldung:
**03.06.87 Patentblatt 87/23**

(45) Bekanntmachung des Hinweises auf die Patenterteilung:
**21.09.88 Patentblatt 88/38**

(84) Benannte Vertragsstaaten:
**DE FR GB IT SE**

(56) Entgegenhaltungen:
**DE-A-2 936 466**
**DE-A-3 220 260**

(73) Patentinhaber: **FORD-WERKE AKTIENGESELLSCHAFT, Ottoplatz 2 Postfach 21 03 69, D-5000 Köln 21 (DE)**
(84) Benannte Vertragsstaaten: **DE IT SE**

(73) Patentinhaber: **FORD MOTOR COMPANY LIMITED, Eagle Way, Brentwood Essex CM13 3BW (GB)**
(84) Benannte Vertragsstaaten: **GB**

(73) Patentinhaber: **FORD FRANCE SOCIETE ANONYME, 344 Avenue Napoléon Bonaparte B.P. 307, F-92506 Rueil Malmaison Cedex (FR)**
(84) Benannte Vertragsstaaten: **FR**

(72) Erfinder: **Prumbach, Günter, Birkenweg 14, D-5208 Eitorf (DE)**
Erfinder: **Lauven, Walther, Wohnpark 8, D-5164 Nörvenich (DE)**
Erfinder: **Graef, Kurt, Roemerfeldstrasse 7, D-5024 Pulheim (DE)**

(74) Vertreter: **Ritzkowsky, Harald, Dipl.-Ing., Ford-Werke Aktiengesellschaft Patentabteilung Z/DRP Ottoplatz 2, D-5000 Köln 21 (DE)**

LIBER, STOCKHOLM 1988

EP 0 223 921 B1

## Beschreibung

Die Erfindung bezieht sich auf eine Parksperre für automatische Getriebe von Kraftfahrzeugen der im Oberbegriff des Patentanspruchs 1 erläuterten Art.

Aus der DE-A-2 936 466 ist eine Parksperre für automatische Getriebe von Kraftfahrzeugen der im Oberbegriff des Patenanspruchs 1 erläuterten Art bekannt.

Bei dieser bekannten Parksperre ist eine gegenüber der Betätigungsstange entgegen der Kraft einer Feder verschiebbare Schiebehülse mit einer konischen Schulter vorgesehen, zur Abstützung der Feder muß hierbei jedoch ein Federteller durch entsprechende Einrichtungen an der Betätigungsstange festgelegt werden.

Aus der DE-A-3 220 260 ist eine weitere Parksperre für automatische Getriebe von Kraftfahrzeugen der im Oberbegriff erläuterten Art bekannt, bei dieser bekannten Parksperre ist die die Schiebehülse beaufschlagende Feder bereits innerhalb der Schiebehülse zwischen einer Schulter an der Betätigungsstange und einem Sprengring angeordnet.

Die Anordnung von Federtellern mit ihrer entsprechenden Abstützung bzw. die Anordnung von Sprengringnuten und Sprengring an der Betätigungsstange ist einerseits teuer in der Herstellung und andererseits im Falle der Sprengringnut wird der Querschnitt der Betätigungsstange geschwächt, wodurch es bei Fertigungsfehlern infolge hoher Kerbwirkung und infolge der hohen Belastungen, denen eine Parksperre für ein automatische Getriebe ausgesetzt ist, es zum Abreißen der Betätigungsstange kommen kann, wodurch die wichtige Parksperre ausfallen kann.

Die Aufgabe der Erfindung ist es, eine Parksperre für automatische Getriebe von Kraftfahrzeugen der im Oberbegriff des Patentanspruchs 1 erläuterten Art derart zu verbessern, daß ihre Herstellung einfacher und kostengünstiger ist und daß sie keine Schwachstellen beinhaltet, die die Funktionssicherheit beeinträchtigen könnten.

Gemäß der Erfindung wird diese Aufgabe gelöst, indem eine Parksperre für automatische Getriebe von Kraftfahrzeugen der im Oberbegriff des Patentanspruchs 1 erläuterteten Art die im Kennzeichenteil des Patentanspruchs 1 aufgezeigten Maßnahmen aufweist.

Dadurch, daß die mit ihrem abgewinkelten Ende mit dem Handwöhlhebel verbundene Betätigungsstange an ihrem anderen Ende durch Anstauchen zu einem verdickten Kolbenteil geformt ist, der in einem Zylinderteil in der als einstückiges Fließpreßteil ausgebildeten Schiebehülse geführt aufgenommen wird und die Einrückfeder zwischen dem Boden des Zylinderteiles und dem Ende des Kolbenteiles innerhalb der Schiebehülse angeordnet ist und der über den Kolbenteil überstehende Rand des Zylinderteiles umgebördelt wird, wird eine Parksperre erzielt, die aus einem Minimum an Bauteilen besteht und keine Schwachstellen aufweist.

Darüber hinaus kann durch eine entsprechende Auswahl der den abgeschlossenen Zylinderteil mit der Außenluft verbindenden Bohrung und der Anordnung zweier Einrückfedern beim Einrücken der Schiebehülse eine weiche Federcharakteristik und ein erwünschter Stoßdämpfereffekt erzielt werden.

Die Erfindung wird anhand eines in der beiliegenden Zeichnung gezeigten Ausführungsbeispieles näher erläutert.
Es zeigt:

Fig. 1 eine Seitenansicht einer Parksperre für ein automatische Getriebe mit der erfindungsgemäßen Betätigungsstange-Schiebehülsen-Verbindung;

Fig. 2 zeigt eine Teilansicht der durch die Schiebehülse mit konischer Schulter verschiebbaren Parkklinke und deren zugehöriges Park-Zahnrad und

Fig. 3 eine Draufsicht auf die Betätigungsstange-Schiebehülsen-Verbindung in Fig. 1.

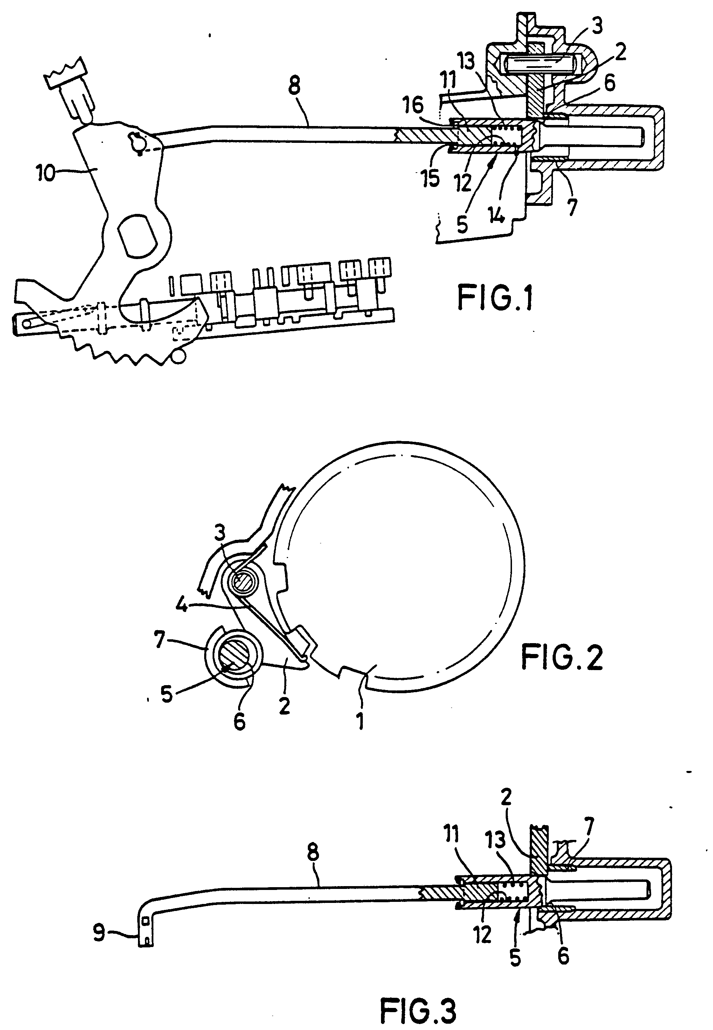

Die in den Figuren 1 bis 3 gezeigte Parksperre für ein automatisches Getriebe von Kraftfahrzeugen besteht im Wesentlichen aus einem Park-Zahnrad 1, das auf der nicht näher bezeichneten Ausgangswelle des Getriebes drehfest angeordnet ist sowie aus einer schwenkbaren Parkklinke 2, die um einen seitlich zum Park-Zahnrad 1 angeordneten Schwenkbolzen 3 verschwenkbar ist und normalerweise von einer Rückstellfeder 4 außer Eingriff mit dem Park-Zahnrad 1 gehalten wird. Die Parkklinke 2 wird hierbei durch eine Schiebehülse 5 mit einer konischen Schulter 6 in Eingriff mit dem Park-Zahnrad 1 gedrückt sobald die Schiebehülse 5 in den Bereich der Parkklinke 2 bewegt wird, wobei sie sich an einer Führung 7 abstützt, die in einem Teil des Getriebegehäuses angeordnet ist.

Die Schiebehülse 5 mit der konischen Schulter 6 ist über eine Betätigungsstange 8 betätigbar, deren eines abgewinkeltes Ende 9 in Eingriff mit einem Hebel 10 steht, der in Wirkverbindung mit einem Handwählhebel des automatischen Getriebes steht, über den die unterschiedlichen Betriebsbereiche des automatischen Getriebes eingestellt werden können.

Die Betätigungsstange 8 ist hierbei an ihrem dem abgebogenen Ende 9 abliegenden anderen Ende durch Anstauchen zu einem verdickten Kolbenteil 11 geformt, der in einem entsprechenden Zylinderteil 12, der als einstückiges Fließpreßteil ausgebildeten Schiebehülse 5 aufgenommen wird. Im inneren Teil des Zylinderteiles 12 sind die als Schraubenfedern ausgebildeten Einrückfedern 13 sowie ein bzw. zwei Stützscheiben der Schiebehülse 5 angeordnet. Der innere Teil des Zylinderteiles 12 steht hierbei über eine kleine Bohrung 14 mit der Außenatmosphäre in Verbindung, um eine Bewegung des Kolbenteiles 11 innerhalb des Zylinderteiles 12 zu ermöglichen. Der über den Kolbenteil 11 nach der einen Seite überstehende Rand 15 des Zylinderteiles 12 der Schiebehülse 5 wird unter Zwischenlage eines Abstandsringes 16 umgebördelt oder umgerollt, wodurch eine in der Herstellung einfache und in der Funktionssicherheit zuverlässige Verbindung zwischen der Betätigungsstange 8 und der Schiebehülse 5 erzielt wird, die vor allem auch keine Schwächung der Betätigungsstange bewirkt.

Wird der Hebel 10, der mit dem Handwählhebel des automatischen Getriebes verbunden ist, in die Parkstellung bewegt, so wird die Betätigungsstange 8 in Fig. 1 gesehen nach rechts verschoben und verschiebt unmittelbar die Schiebehülse 5, sofern die Parkklinke 2 mit ihrem Sperrzahn in eine Sperrnut am Park-Zahnrad trifft.

Wird die Betätigungsstange in Fig. 1 gesehen nach rechts verschoben und trifft die Parkklinke 2 nicht auf eine Sperrnut, so wird die Schiebehülse 5 durch die mit ihr zusammenwirkende Führung 7 an einer axialen Bewegung gehindert, die Bewegung der Betätigungsstange 8 wird jedoch durch eine Verschiebung des Kolbenteiles 11 im Zylinderteil 12 der Schiebehülse ermöglicht, wobei die Einrückfedern 13 vorgespannt werden. Sobald nun durch eine geringe Drehung der Ausgangswelle eine Verdrehung des Park-Zahnrades stattfindet, kann der Sperrzahn der Parkklinke 2 in eine Sperrnut des Park-Zahnrades einfallen, was unmittelbar durch die Wirkung der konischen Schulter 6 in Verbindung mit den vorgespannten Einrückfedern 13 bewirkt wird. Die enge Bohrung 14 im Zylinderteil 12 sorgt dabei dafür, daß bei der Vorspannung der Einrückfeder 13 Luft aus dem Zylinderteil 12 entweichen kann. Fällt der Sperrzahn der Parklinke 2 in eine Sperrnut des Park-Zahnrades 1 ein, so kann die Verschiebung der Schiebehülse 5 durch die vorgespannten Einrückfedern 13 verhältnismäßig schnell erfolgen, wodurch es zu einem unerwünschten Schlaggeräusch kommen kann. Durch eine entsprechende Dimenisonierung der Bohrung 14 kann eine Abdämpfung dieser Einrückbewegung erreicht werden.

## Patentansprüche

1. Parksperre für automatische Getriebe von Kraftfahrzeugen, mit einem Park-Zahnrad (1), das auf der Ausgangswelle des Getriebes drehfest angebracht ist, einer schwenkbaren Parkklinke (2), die zwischen einer Ruhelage außer Eingriff mit dem Park-Zahnrad (1) und einer Wirklage in Eingriff mit dem Park-Zahnrad (1) beweglich ist, einer mit einem mit dem Handwählhebel verbundenen Hebel (10) über ein abgewinkeltes Ende (9) verbundenen Betätigungsstange (8) mit einer gegenüber der Betätigungstange entgegen der Kraft einer Einrückfeder (13) verschiebbaren Schiebehülse (5) mit einer konischen Schulter (6) zum Verschieben der Parkklinke (2) aus der Ruhelage in die Wirklage und mit einer Führung (7) für die Schiebehülse im Getriebegehäuse, dadurch gekennzeichnet, daß die mit ihrem abgewinkelten Ende (9) mit dem mit dem Handwählhebel verbundenen Hebel (10) verbundene Betätigungsstange (8) an ihrem anderen Ende durch Anstauchen zu einem verdickten Kolbenteil (11) geformt ist, der in einem Zylinderteil (12) der als einstückiges Fließpreßteil ausgebildeten Schiebehülse (5) aufgenommen wird und wobei die Einrückfeder (13) innerhalb des Zylinderteiles (12) angeordnet ist und nach erfolgter Montage der über den Kolbenteil (11) übergreifende Rand (15) des Zylinderteiles (12) unter Zwischenschaltung eines Abstandsringes (16) umgebördelt oder umgerollt wird.

2. Parksperre nach Anspruch 1, dadurch gekennzeichnet, daß der vom Kolbenteil (11) und Zylinderteil (12) gebildete geschlossene Zylinderraum, in dem die Einrückfeder (13) angeordnet ist, über eine kleine Bohrung (14) in Verbindung mit der Außenatmosphäre steht, um einerseits eine Vorspannung der Einrückfeder (13) und andererseits eine gegebenenfalls abgedämpfte Einrückbewegung der Schiebehülse (5) zu ermöglichen.

3. Parksperre nach den Ansprüchen 1 und 2, dadurch gekennzeichnet, daß in dem vom Kolbenteil (11) und Zylinderteil (12) gebildeten geschlossenen Zylinderraum zwei konzentrisch zueinander liegende Einrückfedern (13) angeordnet sind.

## Claims

1. A parking lock for automatic gearboxes of motor vehicles, having a parking gearwheel (1) which is mounted rotationally rigidly on the output shaft of the gearbox, a pivotable parking pawl (2) which is movable between a rest position disengaged from the parking gearwheel (1) and an operative position in engagement with the parking gearwheel (1), an actuating rod (8) which is connected by way of an angled end (9) to a lever (10) connected to the manual selector lever and which has a sliding sleeve (5) displaceable relative to the actuating rod against the force of an engagement spring (13) and having a conical shoulder (6) for displacing the parking pawl (2) from the rest position into the operative position and having a guide (7) for the sliding sleeve in the gearbox casing, characterized in that the actuating rod (8) connected at its angled end (9) to the lever (10) connected to the manual selector lever is shaped by upsetting at its other end to form a thickened piston portion (11) which is received in a cylinder portion (12) of the sliding sleeve (5) formed as an integral extrusion moulded part, the engagement spring (13) being disposed inside the cylinder portion (12) which overlaps the piston portion (11) is flanged over or rolled over with the interposition of a spacer ring (16).

2. A parking lock according to claim 1, characterized in that the closed cylinder space, which is formed by the piston portion (11) and the cylinder portion (12) and in which the engagement spring (13) is disposed, is connected by way of a small bore (14) to the outer atmosphere, in order to permit a pretensioning of the engagement spring (13) on the one hand and an engagement movement - damped if necessary - of the sliding sleeve (5) on the other.

3. A parking lock according to claims 1 and 2, characterized in that two engangement springs (13) arranged concentrically to one another are disposed in the closed cylinder space formed by the piston portion (11) and the cylinder portion (12).

**Revendications**

1. Blocage de stationnement pour boîtes de vitesses automatiques de véhicules automobiles, comprenant une roue dentée de stationnement (1), montée solidairement en rotation sur l'arbre de sortie de la boîte de vitesses, un cliquet de stationnement pivotant (2) qui peut se déplacer entre une position de repos, dans laquelle il est hors de prise avec la roue dentée de stationnement 1, et une position active dans laquelle il est en prise avec la roue dentée de stationnement (1), une tringle d'actionnement (8) qui est reliée par une extrémité coudée (9) à un levier (10), lui-même relié au levier sélecteur manuel, cette tringle étant munie d'un manchon coulissant (5) qui peut coulisser par rapport à la tringle d'actionnement à l'encontre de la force d'un ressort d'enclenchement (13) et qui est munie d'un épaulement conique (6) servant à faire passer le cliquet de stationnement (2) de la position de repos à la position active, et un guidage (7) servant à guider le manchon coulissant dans le carter de la boîte de vitesses, caractérisé en ce que la tringle d'actionnement (8) qui est reliée par son extrémité coudée (9) au levier (10), qui est lui-même relié au levier sélecteur manuel, est transformée à son autre extrémité, par refoulement, en une partie renflée formant piston (11) qui est logée dans une partie formant cylindre (12) du manchon coulissant (5) constitué par un élément d'une seule pièce formé par extrusion, le ressort d'enclenchement (13) étant disposé à l'intérieur de la partie formant cylindre (12) et le bord (15) de la partie formant cylindre (12) qui déborde au-delà de la partie formant piston étant rabattu ou roulé après exécution du montage, avec interposition d'une bague entretoise (16).

2. Blocage de stationnement selon la revendication 1, caractérisé en ce que la chambre de cylindre fermée formée par la partie formant piston (11) et par la partie formant cylindre (12), et dans laquelle le ressort d'enclenchement (13) est disposé, est en communication avec l'atmosphère extérieure par un petit perçage (12), d'une part, pour permettre de précontraindre le ressort d'enclenchement (13) et, d'autre part, pour permettre d'obtenir un mouvement d'enclenchement éventuellement freiné du manchon coulissant (5).

3. Blocage de stationnement selon les revendications 1 et 2, caractérisé en ce que dans la chambre de cylindre fermée formée par la partie formant pis ton (11) et par la partie formant cylindre (12), sont disposés deux ressorts d'enclenchement (13) qui sont disposés concentriquement l'un à l'autre.

0 223 921

FIG.1

FIG.2

FIG.3